# EUROPEAN PATENT APPLICATION

(11) **EP 2 154 919 A1**
(43) Date of publication of application: **17.02.2010**
(21) Application number: 08305291.0
(22) Date of filing: 20.06.2008
(51) Int. Cl.: H04W 36/14

(54) **Mobility management method in a heterogeneous system and related devices**

(71) Applicant: FRANCE TELECOM, 75015 Paris (FR)
(72) Inventor: Duda, Adrian, London E17 7BT (GB); Dong, Song, Egham TW20 9HN (GB)
(74) Representative: Cabinet Plasseraud

(57) **Abstract**

Mobility management method in a system comprising a first radio network controlled by a controller (6;13;23;29;30;36) and a set of at least one second radio network, the first and second radio networks using different radio interfaces. The controller stores an association (A1) between a cluster (1) of cells (F1,F2,...,FN) of the first radio network overlapped by a coverage (2) of a second radio network of said set and said second radio network or the second radio interface. Upon detection of conditions for initiating a handover of a communication involving a mobile station (MS;3;10;20;28;35) and in progress with a cell (F1) of said cluster: the stored association is retrieved ; the mobile station is instructed to listen to the second radio interface ; and reporting information relating to second radio networks detected by the mobile station is received.

## Description

The present invention relates to mobility management in a heterogeneous system.

It more particularly relates to mobility management in a system comprising a first and a second radio networks having at least partially overlapping coverage.

While a communication is in progress with the first radio network initially, it may be advantageous under some circumstances to hand it over to the second radio network.

This is possible when the same radio interface (i.e. the same access technology) is used by the first and second radio networks, as a single mode mobile station involved in said communication can make measurements on both radio networks and report them to a controller of the first radio network. Based on the reported measurements, the controller can finally decide to which radio network a handover should be performed if necessary.

The technical specification 3GPP TS 43.318 V8.1.0, "3rd Generation Partnership Project; Technical Specification Group GSM/EDGE Radio Access Network; Generic Access Network (GAN); Stage 2 (Release 8)", released in February 2008, gives an example of such handover procedure in a system comprising a Generic Access Network (GAN) and a GSM EDGE Radio Access Network (GERAN) or a Universal Terrestrial Radio Access Network (UTRAN).

It is reminded that a GAN network is a generic IP access network which provides connectivity between the mobile station (MS) and a GAN controller (GANC) connected to a core network (CN) to which the GANC appears as a GERAN Base Station Subsystem (BSS) or a UTRAN Radio Network Controller (RNC). The GANC includes a Security Gateway (SEGW) that terminates secure remote access tunnels from the MS, providing mutual authentication, encryption and data integrity for signalling, voice and data traffic.

The situation is more complex however when the first and second radio networks have different radio interfaces (i.e. different access technologies).

First, only a dual mode mobile station is capable of communicating either with the first radio network or with the second radio network.

Then, performing a handover between the first and second radio networks would require the dual mode mobile station involved in a communication with the first radio network initially, to make measurements on the second radio network in addition to the first radio network and in advance to the handover.

This could be achieved by continuously and simultaneously monitoring both radio interfaces of the first and a second radio networks at the dual mode mobile station. But this would be very power consuming for the mobile station.

So, there is a need for mobility management improvement in such situation.

The invention proposes a mobility management method in a system comprising a first radio network controlled by a controller and a set of at least one second radio network, the first radio network using a first radio interface and the at least one second radio network using a second radio interface different from the first radio interface, the controller storing an association between a cluster of cells of the first radio network overlapped by a coverage of a second radio network of said set and said second radio network or the second radio interface.

The method comprises the following steps performed at the controller, upon detection of conditions for initiating a handover of a communication involving a mobile station and in progress with a cell of said cluster:
- retrieving the stored association between the cluster to which said cell belongs and said second radio network or the second radio interface ;
- instructing the mobile station to listen to the second radio interface ; and
- receiving reporting information relating to second radio networks detected by the mobile station.

In this way, the controller gets relevant information it can use to decide if the communication can be transferred to a second radio network, or if it should stay on the first radio network.

The battery of the mobile station can be preserved however, as the mobile station can power up its capacities for listening to the second radio interface only when instructed to do so by the controller, in preparation for a potential handover.

The invention is well suited for a cluster including femtocells serviced by home base stations, or any other cells with a small coverage area. But it may also apply to other types of cells.

Advantageously, the above mentioned method steps may be carried out by slightly modifying a few messages exchanged in the handover procedure from a Generic Access Network (GAN) to a GSM EDGE Radio Access Network (GERAN) or a Universal Terrestrial Radio Access Network (UTRAN), as described in the technical specification 3GPP TS 43.318 V8.1.0.

Another aspect of the present invention proposes a controller for controlling a first radio network of a system further comprising a set of at least one second radio network, the first radio network using a first radio interface and the at least one second radio network using a second radio interface different from the first radio interface, the controller comprising a storage unit capable of storing an association between a cluster of cells of the first radio network overlapped by a coverage of a second radio network of said set and said second radio network or the second radio interface.

The controller further comprises, upon detection of conditions for initiating a handover of a communication involving a mobile station and in progress with a cell of said cluster:
- an association retriever for retrieving, from the storage unit, the association between the cluster to which said cell belongs and said second radio network or the second radio interface;
- an instruction unit for instructing the mobile station to listen to the second radio interface; and
- a receiving unit for receiving reporting information relating to second radio networks detected by the mobile station.

Still another aspect of the present invention proposes a computer program product for mobility management in a system comprising a first radio network controlled by a controller and a set of at least one second radio network, the first radio network using a first radio interface and the at least one second radio network using a second radio interface different from the first radio interface, the controller storing an association between a cluster of cells of the first radio network overlapped by a coverage of a second radio network of said set and said second radio network or the second radio interface.

The computer program product comprises code instructions for, when loaded and run on the controller, carrying out the following steps, upon detection of conditions for initiating a handover of a communication involving a mobile station and in progress with a cell of said cluster:
- retrieving the stored association between the cluster to which said cell belongs and said second radio network or the second radio interface ;
- instructing the mobile station to listen to the second radio interface ; and
- receiving reporting information relating to second radio networks detected by the mobile station.

Still another aspect of the present invention proposes a mobile station capable of being involved in a communication in a system comprising a first radio network controlled by a controller and a set of at least one second radio network, the first radio network using a first radio interface and the at least one second radio network using a second radio interface different from the first radio interface, the controller storing an association between a cluster of cells of the first radio network overlapped by a coverage of a second radio network of said set and said second radio network or the second radio interface.

The mobile station comprises, with respect to a communication in progress with a cell of said cluster:
- a receiving unit for receiving instruction from the controller to listen to the second radio interface; and
- a reporting unit for reporting to the controller information relating to second radio networks detected by the mobile station.
   The preferred features of the above aspects which are indicated by the dependent claims may be combined as appropriate, and may be combined with any of the above aspects of the invention, as would be apparent to a person skilled in the art.
- FIG.1 shows an example of a system in which the invention may take place ;
- FiGs.2-4 show examples of alternative architectures of a system in which the invention may take place ;
- FIGs.5-6 show message exchanges which may be used according to an advantageous embodiment of the invention.

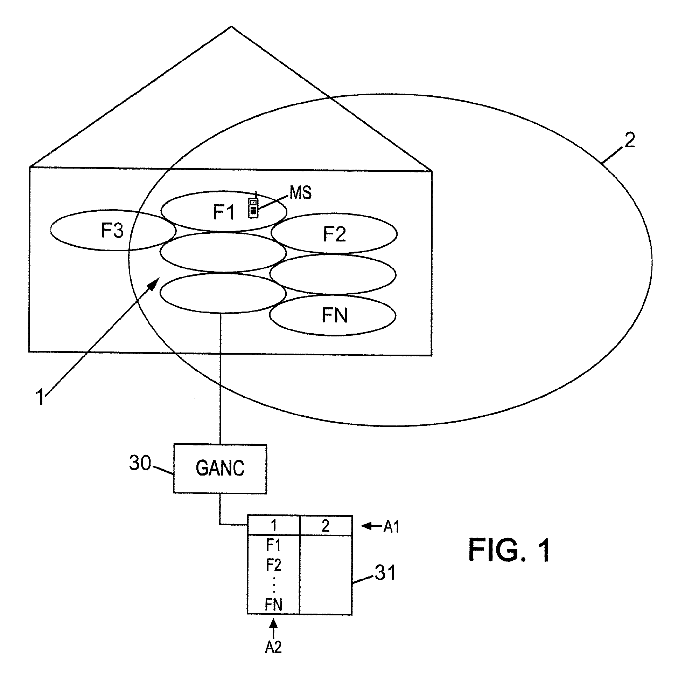

FIG.1 relates to a system comprising a first radio network using a first radio interface (i.e. a first access technology) and a second radio network using a second radio interface (i.e. a second access technology), the first and second radio interfaces being different. The system may also include more than one second radio network using said second radio interface.

The first radio network comprises a cluster 1 of cells F1,F2,...,FN serviced by respective base stations. The second radio network (or at least one of the second radio networks when there are more than one) has a radio coverage 2 which overlaps the cluster 1. More precisely, the second radio network coverage 2 overlaps only partially the cell F3, while it totally overlaps the other cells of the cluster 1. Of course, the first radio network may further include other cells which are not overlapped at all by the second radio network coverage 2.

In the following, the case where the cells F1,F2,...,FN include femtocells serviced by respective home base stations (or Home NodeBs) will be more particularly focused on. This is because the invention is well suited to this case. In particular, due to their limited coverage, it is likely that a cluster of femtocells will be largely overlapped by the coverage of another radio network.

However, this is for illustration purpose only and it will be understood that the cells of the first radio network may be other types of cells, such as picocells, microcells, or even macrocells.

It is reminded that femtocells are typically designed for use in residential (as schematically shown in FIG.1) or small business environments.

The Home NodeBs (HNBs) servicing femtocells are being defined by 3GPP working groups, such as SA1 and CT. Their current state of specification can be found in the technical report 3GPP TR 25.820 V8.1.0, "3rd Generation Partnership Project; Technical Specification Group Radio Access Networks; 3G Home NodeB Study Item Technical Report (Release 8)", released in May 2008.

The HNBs connect to the service provider's network via broadband (such as DSL or cable). Current designs typically support 2 to 5 mobile stations in a residential setting.

One of the options under study in the standardisation bodies is to connect the HNBs to the core network (CN) by means of a Generic Access Network (GAN). This scheme will be embraced in the following, although it should be kept in mind that the femtocells F1,F2,...,FN of the first radio network could be connected to the CN in any other possible way.

Likewise, the first radio network may be a GAN network making use of cells which are not necessarily femtocells, but may be other types of cells.

The first radio network is controlled by a controller, which may be a GANC (GAN Controller) when the first radio network is a GAN network.

As to the second radio network (or the second radio networks when there are more than one), it may be a Wireless Local Area Network (WLAN) or any other type of radio network which has a radio interface different from the first radio network. As a result, to be capable of communicating with either the first or the second radio network, a mobile station (MS) would have to be a dual mode MS, i.e. an MS supporting both first and second radio interfaces of the first and second radio networks.

The first radio network controller, i.e. the GANC 30 in the example illustrated in FIG.1, comprises a storage unit 31, which may be internal or external to the GANC 30. This storage unit 31 stores an association A1 between the cluster 1 and the second radio network overlapping the cluster 1, as schematically shown in FIG.1. In this case, the association A1 clearly identifies the second radio network, for instance by use of its name (e.g. SSID) or any other attribute. This association A1 is meant to indicate the existence of an overlap between the second radio network coverage 2 and the cluster 1.

Alternatively, the stored association A1 may be between the cluster 1 and the second radio interface, i.e. the access technology used by the second radio network(s). This association A1 is meant to indicate the existence of an overlap between the cluster 1 and the coverage of a second radio network using the second radio interface (e.g. WLAN).

The way the GANC 30 learn the association A1 will be detailed later.

Moreover, the GANC 30 knows that the femtocells F1,F2,...,FN belong to the same cluster 1. In FIG.1, the association A2 between the femtocells F1,F2,...,FN and the cluster 1 is also shown as stored in the storage unit 31. However, this association may be stored in another storage unit, internal or external to the GANC 30. Alternatively, the association A2 may not be stored but derived from other information available at the GANC 30, such as the fact that each one of the femtocells F1,F2,...,FN has the other femtocells defined as its neighbouring cells, or from reports from the MS (if the MS sees the femtocells F1, F2, ..., FN, then the GANC 30 may interpret these femtocells as belonging to the same cluster 1).

The case where an MS is involved in a communication in progress with the femtocell F1 of the cluster 1 will now be considered for illustration purpose. Such communication, which goes through the radio interface of the first radio network, is controlled by the GANC 30.

At this stage, there is no need for the MS to listen to the second radio network, because the ongoing communication can be served correctly by the femtocell F1 of the first radio network. Power consumption of the MS is thus used carefully, just for listening to F1, and not to radio networks of different radio interfaces.

At some point however, the GANC 30 may detect conditions for initiating a handover of the ongoing communication.

Those conditions may include a decrease of the quality of service experienced by the MS user, e.g. because the MS is approaching the coverage border of the femtocell F1. They may also include the fact that too many MSs are attached to the femtocell F1, while current femtocell designs generally support only a very limited number of users per femtocell, typically between 2 and 5. Other exemplary conditions for initiating a handover may include the femtocell F1 having too big traffic load going through it, the MS experiencing too much interference from other femtocells, the femtocell F1 not being well suited to serve the ongoing communication e.g. in terms of quality of service (available throughput, delay, etc.) or communication cost, etc.

Of course, other conditions may be used as well, in addition to or in place of the above mentioned examples.

Note that detecting conditions for initiating a handover means detecting a need for a handover, but does not necessarily require actually initiating the handover. The GANC 30 may decide to initiate the handover later or even not to initiate handover at all.

As mentioned above, the GANC 30 knows that the femtocell F1 belongs to the cluster 1, e.g. from the association A2 stored in its storage unit 31.

Upon detection of conditions for initiating a handover of the communication, the GANC 30 can retrieve, from its storage unit 31, the association A1 between the second radio network (or the second radio interface) and the cluster 1. This is an indication that a handover of the communication from the first radio network to the second radio network (or to a second radio network when the association A1 refers to the second radio interface) might be appropriate.

If there is such an association A1, then the GANC 30 instructs the MS to listen to the second radio interface. Upon reception of this instruction, the MS may power-up its corresponding second radio interface. So when the second radio network is a WLAN network, the dual mode MS powers-up its WLAN capacities so as to detect the second radio network (or any other second radio network if there are more than one seen by the MS). This can be achieved by scanning the range of frequencies used by WLAN networks, and then identifying the second radio network, as well as other WLAN networks possibly.

In this way, the WLAN capacities of the MS are activated only when a need for handover occurs, i.e. in preparation for a possible handover. This is efficient in terms of MS power consumption and MS battery saving.

In response, the MS sends a report to the GANC 30. This report includes, possibly in addition to information about networks of the same radio interface as the first radio network, information relating to the second radio network, such as an identity of the second radio network (name, SSID, etc.) and optionally some other information, such as a received signal strength from the second radio network. Alternatively, the reported information relating to the second radio network may only include its radio interface, e.g. an indication that a WLAN network is seen by the MS, without specifying the identity of that network.

When there are more than one second radio network using the second radio interface, all the second radio networks detected by the MS may be included in the reporting.

Note that even when the MS report does not contain any information about a second radio network, this absence of information may be considered as an information in itself, as it indicates to the GANC 30 that the MS does not see that second radio network.

In case the MS report does not contain any information about any second radio network, should a handover be performed, it would have to be to another femtocell of the first radio network.

Several networks may be reported by the MS, for example when more than one WLAN network can be seen by the MS. In this case, the networks may be reported by the MS in order of preference for handover.

Advantageously, instructing the MS to listen to the second radio interface may be performed selectively depending on a level of subscription the MS user has with the operator of the first radio network. In this way, for example, handovers to the second radio network instructed by the controller may be reserved for "gold" subscribers, while the other subscribers with a lower level of subscription would have to stay on the first radio network, or power up the radio interfaces to detect networks of other technology, without receiving any prior indication from the controller as to whether the MS is likely to see any other networks.

The reported information can then be used by the GANC 30 to make a handover decision. If the GANC 30 decides to hand off the communication, it thus chooses whether the handover should transfer the communication to another femtocell of the first radio network or to the second radio network (or to a second radio network reported by the MS when there are more than one second radio network). Note that the GANC 30 may also choose simply not to perform any handover.

Several criteria may be used for choosing the handover target. One exemplary criterion would be whether a received signal strength from the second radio network reported by the MS (or from a second radio network reported by the MS when there are more than one second radio network) is above a predetermined threshold or not. Another exemplary criterion would relate to the current traffic load or number of users experienced by a potential target femtocell of the first radio network.

Various strategies may be envisaged, as will appear to one skilled in the art, to choose the appropriate target network for handover. This depends mainly on the operator policy.

An example of scenario could be: suppose the number of users connected to the femtocell F1 is 3. Besides, the MS sees another femtocell F2, which has 2 users connected to it. If the maximum number of users who can be simultaneously connected to a femtocell is 4, the GANC 30 could determine that if the MS were to remain more in that femtocell, then its quality of service would continue to deteriorate. And because there are already 2 users already connected to the other femtocell F2, the MS might not experience a better QoS if handed over to F2. But as the MS sees a WLAN as well, it sends a notification to the terminal to handover to the WLAN.

It may happen that the second radio network (or a second radio network reported by the MS when there are more than one second radio network) offers better performances for communications compared to the first radio network, in terms of quality of service and/or mobile station power consumption and/or communication cost. This would often be the case when the second radio network is a WLAN network, but in other cases as well. In terms of experienced QoS, some types of applications (like video) may function better implicitly if going through certain kind of networks (e.g. WLAN), than through others (e.g. GERAN)

In such situation, it may be advantageous to hand the communication over the second radio network, so that the MS user can benefit from those better performances.

So the fact that the GANC 30 is aware of the overlap between a second radio network and the cluster 1, through the association A1 stored in the storage unit 31, enables to perform handovers from the first radio network to the second radio network.

The association A1 between the second radio network or the second radio interface and the cluster 1 may be known by the GANC 30 in different manners. First, the GANC 30 may hold a map of the coverage areas of the first and second radio networks and it may derive the association A1 from the overlap shown by the map. This may happen in particular when the GANC 30 controls the second radio network(s) in addition to the first radio network.

According to another example, the association A1 may be learnt and stored after reporting information indicating the presence of a second radio network was received previously at the GANC 30 from a mobile station (which may be different from the MS mentioned above) involved in a communication in progress with a cell of the cluster 1. This cell may be the femtocell F1 mentioned above or any other femtocell of the cluster. As the GANC 30 knows the composition of the cluster 1 (association A2), it can associate the second radio network or the second radio interface used by the second radio network with the whole cluster 1, after any cell of that cluster was found overlapped by the second radio network.

If, for the cluster 1, there has passed a time T during which the GANC 30 has not received any information as to whether a mobile station connected to one of the femtocells F1,F2,...,FN has seen a WLAN as well, then, when the GANC 30 detects conditions for initiating a handover, the GANC 30 may instruct the MS to check whether is sees any WLAN connection. The MS will then send back to the GANC 30 reporting information relating to a WLAN network, if there is any. If the GANC 30 finds a WLAN related information, then it may reset the timer T to 0 and the process goes on as normal.

This association learning mode of operation is well suited in the case of femtocells, or any other cells with a small coverage area, as it is likely that a whole cluster of such cells is overlapped by a second radio network when any cell of that cluster was found overlapped by this second radio network.

The case where the first radio network is a GAN network comprising femtocells serviced by respective HNBs and where the second radio network is a WLAN network will now be more particularly described.

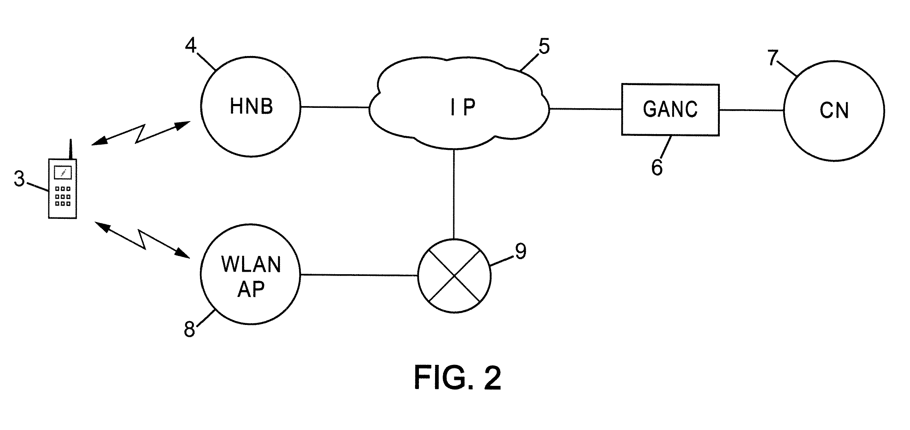

FiGs 2-4 show alternative architectures that may exist in such situation.

In the architecture of FIG.2, the second radio network comprises a WLAN Access Point (AP) 8 with which the MS 3 may communicate through a WLAN radio interface. This WLAN AP 8 is connected to an access router 9, which in turn is connected to the same IP network 5 as the one used for connectivity between the HNB 4 and the GANC 6 of the first radio network. So in this case the GANC 6 controlling the first radio network also has a connection with the WLAN AP 8 through the IP network 5 and the access router 9.

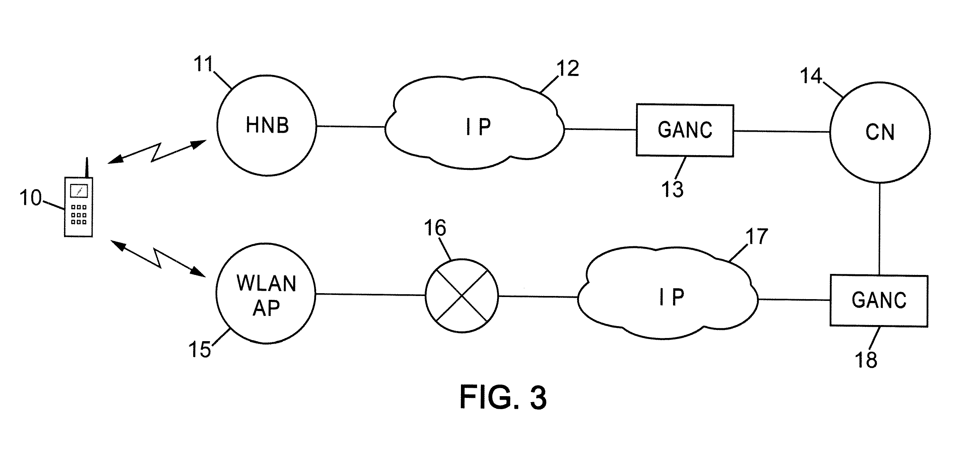

In FIG.3, each one of the first and second radio networks are connected to respective GANC controllers 13 and 18, which are both connected to the same core network 14.

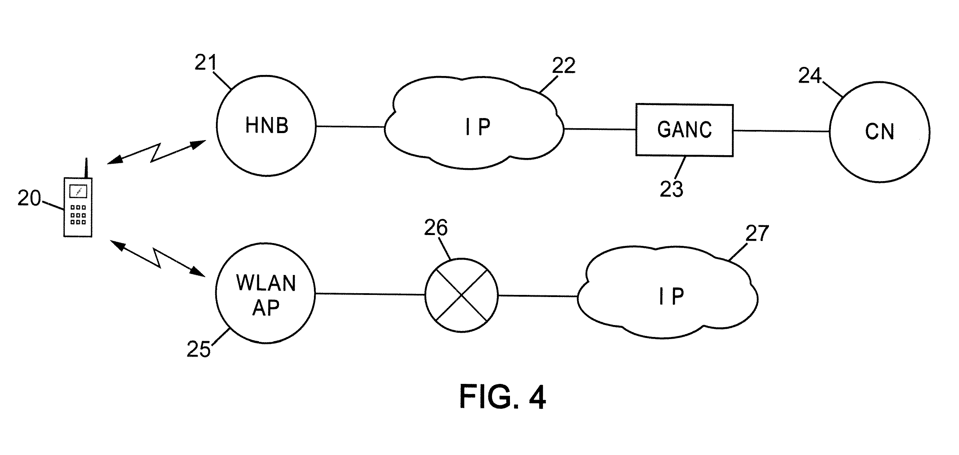

In FIG.4, the WLAN AP 25 of the second radio network is not connected to any GANC.

As mentioned in the introduction, the technical specification 3GPP TS 43.318 V8.1.0 describes the sequence of messages exchanged within the framework of a handover from a GAN network to a GSM EDGE Radio Access Network (GERAN) or a Universal Terrestrial Radio Access Network (UTRAN).

An advantageous embodiment of the present invention proposes to slightly modify this procedure by including the above mentioned operations, to allow handovers from a GAN network to a WLAN network (or any other type of network having a radio interface different from that of the GAN network).

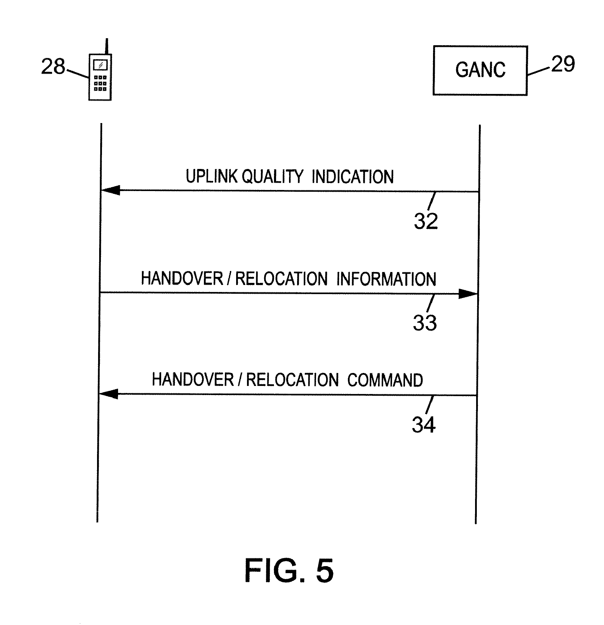

The modified procedure is schematically shown in FIG.5 for the system of FIG.2 or FIG.4.

The message UPLINK QUALITY INDICATION 32 sent from the GANC 29 to the MS 28 corresponds to the message GA-CSR UPLINK QUALITY INDICATION (for the CS case) or the message GA-RRC UPLINK QUALITY INDICATION (for the PS case) mentioned in the TS 43.318, but modified so as to include an instruction for the MS 28 to listen to the second radio interface, that is a WLAN interface in this case. According to the TS 43.318, those messages were used to inform the MS of a problem with the uplink quality of an ongoing call, in preparation for a possible handover.

The modification of the message GA-CSR UPLINK QUALITY INDICATION or GA-RRC UPLINK QUALITY INDICATION mentioned in the TS 43.318 may simply consist in the addition of a small field or flag, the MS knows how to interpret upon reception. This flag will designate the WLAN interface and will have the meaning that networks using the WLAN interface are likely to be seen by the MS. Specific information about names of the networks (e.g. SSID-s) is not required. Of course, other types of modifications may be suitable as well.

The message HANDOVER/RELOCATION INFORMATION 33 sent in response from the MS 28 to the GANC 29 corresponds to the message GA-CSR HANDOVER INFORMATION (for the CS case) or the message GA-RRC RELOCATION INFORMATION (for the PS case) mentioned in the TS 43.318, but modified so as to include information relating to a detected WLAN network, rather than to a GERAN or UTRAN network. Also, in another embodiment, this message could contain information relating to the WLAN network in addition to GERAN or UTRAN networks.

Finally, if a handover to the WLAN network is decided, the message HANDOVER/RELOCATION COMMAND 34 sent from the GANC 29 to the MS 28 corresponds to the message GA-CSR HANDOVER COMMAND (for the CS case) or the message GA-RRC RELOCATION COMMAND (for the PS case) mentioned in the TS 43.318, but modified so as to command a handover to the WLAN network, rather than to a GERAN or UTRAN network.

Afterwards, the communication goes on under control of the same GANC 6 through the WLAN AP 8 for the system of FIG.2, but directly through the IP network 27 for the system of FIG.4.

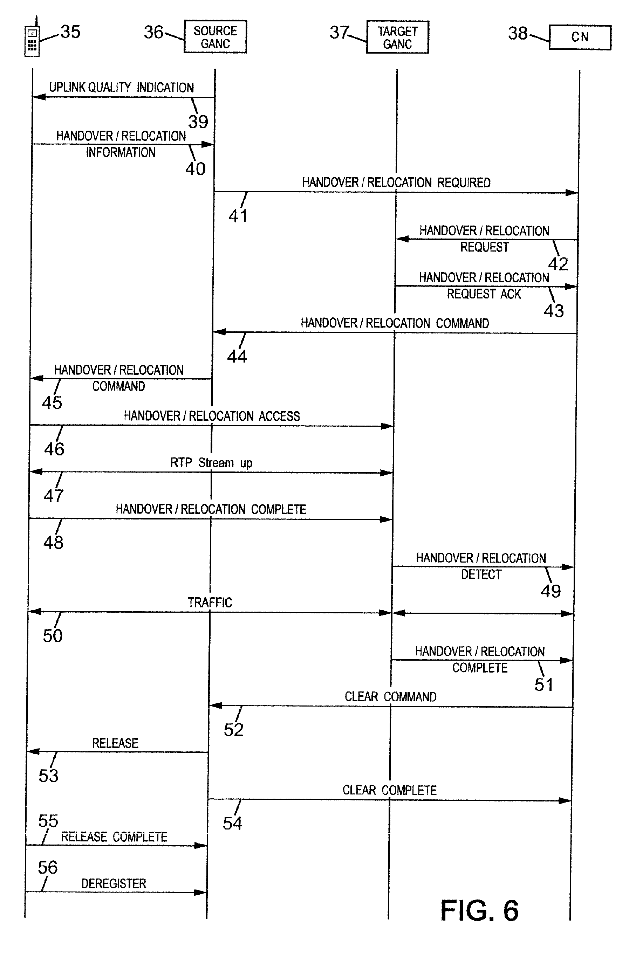

FIG.6 shows the sequence of messages for the system of FIG.3, where the GANC 13 is the source GANC 36 and the GANC 18 is the target GANC 37.

In addition to the messages 39, 40 and 45, which are similar to the messages 32, 33 and 34 of FIG.5 respectively, signaling takes place between the GANCs 36-37 and the core network 38. Other messages may be sent after the message HANDOVER/RElOCATION COMMAND 45 to complete the handover, as shown in FIG.6.

The messages and signaling shown in FIG.6 can be similar to the ones described in the TS 43.318, but note that they are sent in a context where there are two different GANCs : a source GANC 36 and a target GANC 37. This is in contrast with the situation described in TS 43.318 where only one GANC exists.

All or part of the operations carried out by the controller controlling the first radio network may be performed by means of a computer program product loaded and run on the controller, and comprising appropriate code instructions.

## Claims

1. A mobility management method in a system comprising a first radio network controlled by a controller (6;13;23;29;30;36) and a set of at least one second radio network, the first radio network using a first radio interface and the at least one second radio network using a second radio interface different from the first radio interface, the controller storing an association (A1) between a cluster (1) of cells (F1,F2,...,FN) of the first radio network overlapped by a coverage (2) of a second radio network of said set and said second radio network or the second radio interface,
the method comprising the following steps performed at the controller, upon detection of conditions for initiating a handover of a communication involving a mobile station (MS;3;10;20;28;35) and in progress with a cell (F1) of said cluster:
- retrieving the stored association between the cluster to which said cell belongs and said second radio network or the second radio interface ;
- instructing the mobile station to listen to the second radio interface ; and
- receiving reporting information relating to second radio networks detected by the mobile station.

2. The method as claimed in claim 1, wherein the association (A1) between said cluster (1) and said second radio network or the second radio interface is stored after reporting information indicating the presence of said second radio network was received at the controller (6;13;23;29;30;36) from a mobile station involved in a communication in progress with a cell of said cluster.

3. The method as claimed in claim 1, wherein said cluster (1) includes femtocells (F1,F2,...,FN) serviced by home base stations (4;11;21).

4. The method as claimed in claim 1, wherein instructing the mobile station (MS;3;10;20;28;35) to listen to the second radio interface is done in an uplink quality indication message (32;39) sent from the controller to the mobile station.

5. The method as claimed in claim 4, wherein the uplink quality indication message contains a flag designating the second radio interface.

6. The method as claimed in claim 1, wherein the reporting information relating to second radio networks detected by the mobile station is received from the mobile station in a handover/relocation information message (33;40).

7. The method as claimed in claim 1, wherein in the area where the cluster (1) of cells (F1,F2,...,FN) of the first radio network is overlapped by a coverage (2) of a second radio network of said set, said second radio network offers better performances for communications compared to the first radio network in terms of quality of service and/or mobile station power consumption and/or communication cost.

8. The method as claimed in claim 1, wherein instructing the mobile station (MS;3;10;20;28;35) to listen to the second radio interface is performed selectively depending on a level of subscription a user of the mobile station has with an operator of the first radio network.

9. The method as claimed in claim 1, wherein the first radio network is a Generic Access Network (GAN).

10. The method as claimed in claim 1, wherein the at least one second radio network is a Wireless Local Area Network (WLAN).

11. A controller (6;13;23;29;30;36) for controlling a first radio network of a system further comprising a set of at least one second radio network, the first radio network using a first radio interface and the at least one second radio network using a second radio interface different from the first radio interface, the controller comprising a storage unit (31) capable of storing an association (A1) between a cluster (1) of cells (F1,F2,...,FN) of the first radio network overlapped by a coverage (2) of a second radio network of said set and said second radio network or the second radio interface, the controller further comprising, upon detection of conditions for initiating a handover of a communication involving a mobile station (MS;3;10;20;28;35) and in progress with a cell (F1) of said cluster:
- an association retriever for retrieving, from the storage unit, the association between the cluster to which said cell belongs and said second radio network or the second radio interface ;
- an instruction unit for instructing the mobile station to listen to the second radio interface ; and
- a receiving unit for receiving reporting information relating to second radio networks detected by the mobile station.

12. A computer program product for mobility management in a system comprising a first radio network controlled by a controller (6;13;23;29;30;36) and a set of at least one second radio network, the first radio network using a first radio interface and the at least one second radio network using a second radio interface different from the first radio interface, the controller storing an association (A1) between a cluster (1) of cells (F1,F2,...,FN) of the first radio network overlapped by a coverage (2) of a second radio network of said set and said second radio network or the second radio interface,
the computer program product comprising code instructions for, when loaded and run on the controller, carrying out the following steps, upon detection of conditions for initiating a handover of a communication involving a mobile station (MS;3;10;20;28;35) and in progress with a cell (F1) of said cluster:
- retrieving the stored association between the cluster to which said cell belongs and said second radio network or the second radio interface ;
- instructing the mobile station to listen to the second radio interface ; and
- receiving reporting information relating to second radio networks detected by the mobile station.

13. A mobile station (MS;3;10;20;28;35) capable of being involved in a communication in a system comprising a first radio network controlled by a controller (6;13;23;29;30;36) and a set of at least one second radio network, the first radio network using a first radio interface and the at least one second radio network using a second radio interface different from the first radio interface, the controller storing an association (A1) between a cluster (1) of cells (F1,F2,...,FN) of the first radio network overlapped by a coverage (2) of a second radio network of said set and said second radio network or the second radio interface, the mobile station comprising, with respect to a communication in progress with a cell (F1) of said cluster :
- a receiving unit for receiving instruction from the controller to listen to the second radio interface; and
- a reporting unit for reporting to the controller information relating to second radio networks detected by the mobile station.
